# EUROPEAN PATENT APPLICATION

(11) **EP 1 267 145 A2**
(43) Date of publication of application: **18.12.2002**
(21) Application number: 02254109.8
(22) Date of filing: 13.06.2002
(51) Int. Cl.: G01B 11/26, G01C 15/00, G01C 11/26

(54) **Multi position alignment system**

(30) Priority: 14.06.2001 GB 0114511
(71) Applicant: Instro Precision Limited, Broadstairs, Kent CT10 2YD (GB)
(72) Inventor: Morcom, John, c/o Instro Precision Limited, Broadstairs, Kent CT10 2YD (GB); Apperley, Ralph, c/o Instro Precision Limited, Broadstairs, Kent CT10 2YD (GB); Brown, Les, c/o Instro Precision Limited, Broadstairs, Kent CT10 2YD (GB)
(74) Representative: Ertl, Nicholas Justin

(57) **Abstract**

An alignment system for determining the alignment of a plurality of components has a plurality of targets (2), one target being associated with each component. An optical arrangement (4, 1) is associated with each target, for selectively providing an image of the associated target within the field of view of an optical viewing device. This arrangement enables the image of a single target to be in the line of sight of a viewing device (for example telescope), so that the depth can be determined unambiguously.

## Description

This invention relates to an alignment system, for example for aligning complex mechanical structures.

Ensuring that the many parts in complex structures are accurately aligned during manufacture, for example aligning the ribs in a wing or bearings in an engine, is a common problem to which a number of solutions exist.

Traditionally, optical alignment techniques have been used. For example, a series of transparent optical targets are placed at suitable reference points on the various component parts of the structure and an alignment telescope is used to measure the displacement of each target from a reference line. The change in position of each component to bring it into alignment is calculated from the measured displacement. However, this approach requires skilled labour to set up and operate the optical alignment system and operator judgment is required when using the telescope so the alignment process is costly and time consuming.

Recently the optical telescopes have been augmented by image processing systems to eliminate the need for human judgment during the displacement measurement process. For example targets with known patterns are used, and imaging software can then interpret a received image, for example using centroiding software, to determine automatically the misalignment of components.

Because the targets are transparent, the operator can see through the set of targets and focus on each target in turn. However, as the faces of the targets are not completely parallel, refraction introduces a deviation into the line of sight of the telescope, introducing an error into the measurement. This limits the number of targets which can be used or requires the use of more costly targets with highly parallel faces (for example, better than 2 arc seconds).

A further problem is that if two targets are close together, the depth of focus of the telescope is insufficient to enable the operator, or digital image processing system, to differentiate between them.

One way of overcoming this problem is to use a laser beam as the reference line and multiple sensors at each location where alignment of a component is to be measured. Each sensor contains a beam splitter that deflects a portion of the beam onto a position sensitive detector (PSD). A PSD is a silicon photodiode that provides an analogue output directly proportional to the position of a light spot on the detector active area. The analogue output is processed to measure the position of the laser beam reflection and hence to determine the displacement of the component. These systems can work well, but are very costly because each reference point requires a highly linear and accurate PSD device which is a costly component.

The approach described here addresses the problems of these existing systems.

According to a first aspect of the invention, there is provided an alignment system for determining the alignment of a plurality of components, comprising:
an optical viewing device having a field of view;
a plurality of targets, one target being associated with each component;
a plurality of optical arrangements, one optical arrangement being associated with each target, for selectively providing an image of the associated target within the field of view of the optical viewing device.

This arrangement enables the image of a single target to be in the line of sight of the viewing device (for example telescope), so that the depth can be determined unambiguously.

Each optical arrangement may comprise an illuminator for illuminating the associated target and a beam splitter located within the field of view of the optical viewing device for providing an image of the illuminated target in the field of view of the optical viewing device. The beam splitter provides an image into the line of sight, and an illuminated target will provide the strongest image.

Alternatively, each optical arrangement may comprise an illuminator for illuminating the associated target and a mirror, wherein the mirror is moveable between a first position along a line of sight of the optical viewing device for providing an image of the illuminated target and a second position outside the line of sight. In this arrangement, only the mirror of the selected target is in the line of sight at any time.

According to a second aspect of the invention, there is provided an alignment system for determining the alignment of a plurality of components, comprising:
an optical viewing device having a field of view;
a plurality of targets, one target being associated with each component;
a plurality of target drive devices, one target drive device being associated with each target, for selectively moving the target between a first position along a line of sight of the optical viewing device and a second position outside the line of sight.

In this aspect, the target itself is driven into or out of the line of sight.

According to a third aspect of the invention, there is provided an alignment system for determining the alignment of a plurality of components, comprising:
an optical viewing device having a field of view;
a plurality of targets, one target being associated with each component;
a plurality of optical arrangements, one optical arrangement being associated with each target, for providing an image of the associated target within the field of view of the optical viewing device, wherein each optical arrangement provides a different colour image of the associated target; and
an image processor capable of distinguishing between the different colours.

In this aspect, a small number of targets can be viewed and analysed simultaneously.

In the first to third aspects, there is preferably provided a focus control system for the optical viewing device, a camera for recording images received by the optical viewing device, and an image processing system for determining the target position of an illuminated target. This provides an automated system.

According to a fourth aspect of the invention, there is provided an alignment system for determining the alignment of a plurality of components, comprising:
a device for providing a signal along a line of sight; and
a plurality of optical detectors, one optical detector being associated with each component, for determining the location on the detector at which the signal is detected, wherein the signal is selectively routed to each optical detector.

This arrangement uses detectors at each component location, but avoids the problem of deterioration of the signal by selectively routing the signal to only one detector, and ensuring that the other detector arrangements do not interfere with the signal.

Each detector may comprise a movable mirror and a fixed detector, wherein the mirror is moveable between a first position along the path of the signal for reflecting the signal to the fixed detector and a second position outside the path of the signal.

Examples of the invention will now be described in detail with reference to the accompanying drawings, in which:
Figure 1 shows a first example of alignment system according to the invention;
Figure 2 shows a second example of alignment system according to the invention;
Figure 3 shows a third example of alignment system according to the invention;
Figure 4 shows a fourth example of alignment system according to the invention; and
Figure 5 shows a fourth example of alignment system according to the invention.

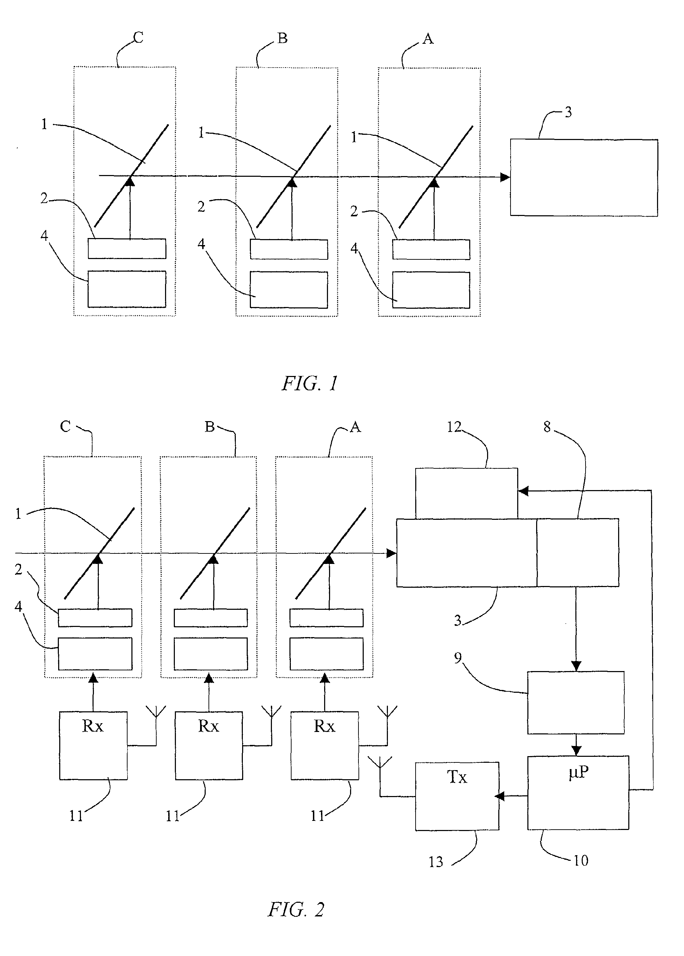

Figure 1 shows three target assemblies A, B, C aligned with the the line of sight of a telescope. For each target assembly, a beam splitter 1 is located to create a virtual image of the target 2 when viewed by the telescope 3. The illuminator 4 is switched on when the target is to be viewed. Otherwise it is turned off, so the observer can focus through the beam splitter to the other targets.

By arranging the output of the illuminator to be significantly higher than the surrounding background illumination, only the target being illuminated will be seen, addressing the problem of insufficient depth of field to distinguish close targets.

It can also be seen that as the line of sight of the telescope does not pass through the target, the target does not need highly parallel faces, which significantly reduces the manufacturing cost of the target.

However, the beam splitter may introduce some deviation of its own and in a preferred embodiment the beam splitter is a "pellicle" type. A pellicle beam splitter is a very thin membrane (a few microns thick) which is coated to give the required reflection coefficient at 45°. The thinness of the pellicle ensures negligible deviation to light passing through it and eliminates ghost images. In a further preferred embodiment the illuminator is implemented with a light emitting diode or diodes or diffused laser diode to deliver a near monochromatic light source. This avoids chromatic aberration in the telescope and extends the operating range of the system.

As shown in figure 2, the alignment telescope can be used with a video camera 8, frame grabber 9 and an image processing computer 10 capable of measuring the centre of a target automatically. This enables the alignment system to be extended to enable completely automatic measurement of multiple targets. Each target is equipped with a radio or infra red receiver 11 configured to turn on the illuminator whenever it recognises a particular code.

The telescope is fitted with a motorised focus control 12, driven by the computer 10 used for image processing. This computer is also provided with a radio or infra red transmitter 13, capable of generating a number of control codes.

In operation, the following sequence of operations is controlled by the computer:
(i) The radio transmitter emits the code corresponding to the first target's illuminator. This causes the first target's illuminator to switch on.
(ii) The computer adjusts the motorised focus control until a sharp image of the first target is achieved. This may either be achieved using known auto-focus algorithms or simply by returning the focus to a known position previously stored by the operator.
(iii) An image of the first target is captured by the video camera/frame grabber and transferred into computer memory.
(iv) The position of the centre of the first target is computed using known centroiding algorithms and stored.

The steps above are then repeated for the different target illuminators. Thus, the radio transmitter next emits the code corresponding to the second target's illuminator, causing the first target illuminator to switch off and the second target illuminator to turn on. Eventually, the position of each target is measured and stored.

To those skilled in the art, it can be seen that the concept of active illumination for each target can be extended in a number of ways depending upon the measurement situation. For example, if it is only required to measure the displacement of say three targets which are close together and hence all in focus, the three targets could be provided with red, green and blue illuminators and a colour video camera used with the telescope. By processing the red, green and blue channels of the colour camera output separately, the displacement of each of the three targets can be measured simultaneously.

Where a very large number of targets are required to be viewed, for example when setting the wing ribs of a large aircraft, the accumulated loss of transmission through a large number of beam splitters can present a problem.

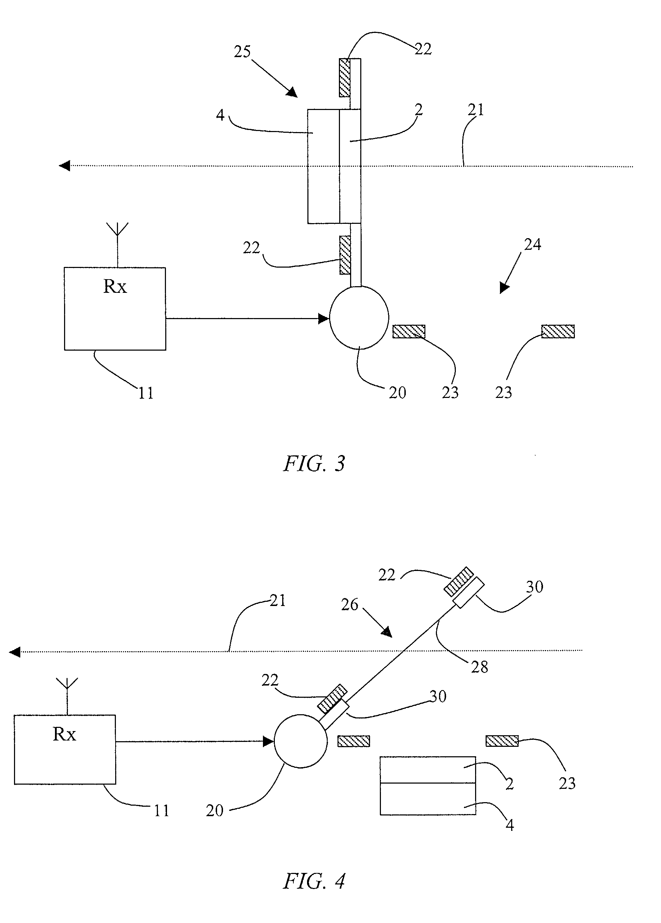

To address this, whilst still enabling the measurement process to be automated, the intermediate targets can be physically switched in and out of the telescope's line of sight under radio control. Figure 3 illustrates one embodiment of the concept.

The target assembly, consisting of the target 2 and illuminator 4 in a housing with a magnetic latch, is mounted on a hinge whose position is governed by an actuator. The hinge and actuator assembly is referenced 20. When the radio receiver 11 decodes the code appropriate to the target 2, power is applied to the actuator which causes the target/illuminator 2, 4 to flip from the "switched out" position 24 to the "switched in" position 25 and the illuminator 4 is turned on. Holding magnets 22 and 23 ensure the system is bistable and the actuator controls which of two states the target assembly is in; either in or out of the telescope's line of sight 21. The magnets 22 hold the target in the line of sight, and the magnets 23 hold the target out of the line of sight. This minimises power consumption.

Although increasing the mechanical complexity of the target, a major benefit of this approach is that the line of sight is totally clear of any optical components at all points except where the displacement is being measured, thus preventing any loss of transmission or deviation through the intermediate targets.

To those skilled in the art, it can be seen that there are many alternative ways of implementing this principle. For example, as shown in Figure 4, to minimise the moving mass, the target/illuminator 2, 4 may be fixed in position and a mirror assembly 26 may be switched in and out of the telescope's line of sight 21. The target assembly 2, 4, which is directed at right angles to the telescope's line of site 21, is either made visible to or hidden from the telescope by the mirror assembly, which comprises a mirror 28 mounted on a frame 30 which is attached to a hinge and actuator assembly 20. The actuator controls which of two positions the mirror assembly can be switched to, either in or out of the telescope's line of sight 21. When the mirror is at 45° to both the target 2 and the telescope's lines of site 21 (as shown in Figure 4), the target is visible to the telescope. Holding magnets 22, 23 again hold the mirror assembly in the selected position.

It should also be noted that the principle of mechanically switching the intermediate targets into or out of position can also be applied with advantage to PSD based systems, to avoid transmission losses in large measuring system applications. In this case, either the PSD would be mechanically switched into the laser beam, or a mirror could be used to deflect the laser beam onto the relevant PSD.

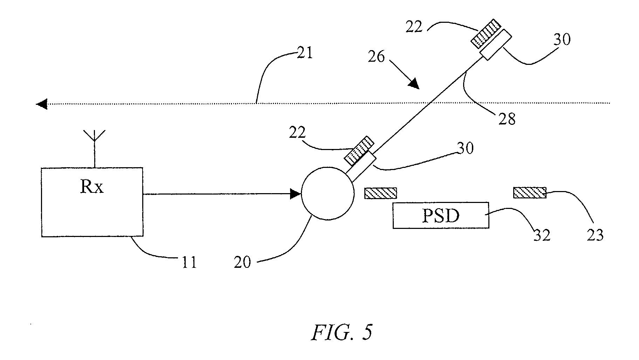

For example, Figure 5 shows the detection equipment associated with one component. The same reference numerals are used as in Figure 4, and the moveable mirror assembly 26 is used to selectively reflect the laser beam onto a respective position sensitive detector (PSD) 32. The detector 32 has a fixed position relative to the component of which the position is being measured. As mentioned above, the PSD itself may be switchable into and out of the path of the laser beam, for example using an arrangement such as shown in Figure 3.

Various embodiments of the invention have been described, but it will be appreciated that many further specific implementations are possible.

## Claims

1. An alignment system for determining the alignment of a plurality of components, comprising:
an optical viewing device having a field of view;
a plurality of targets, one target being associated with each component; and
a plurality of optical arrangements, one optical arrangement being associated with each target, for selectively providing an image of the associated target within the field of view of the optical viewing device.

2. An alignment system as claimed in claim 1, wherein the optical viewing device comprises a telescope.

3. An alignment system as claimed in claim 1 or 2, wherein each optical arrangement comprises an illuminator for illuminating the associated target and a beam splitter located within the field of view of the optical viewing device for providing an image of the illuminated target in the field of view of the optical viewing device.

4. An alignment system as claimed in claim 1 or 2, wherein each optical arrangement comprises an illuminator for illuminating the associated target and a mirror, wherein the mirror is moveable between a first position along a line of sight of the optical viewing device for providing an image of the illuminated target and a second position outside the line of sight.

5. An alignment system for determining the alignment of a plurality of components, comprising:
an optical viewing device having a field of view;
a plurality of targets, one target being associated with each component; and
a plurality of target drive devices, one target drive device being associated with each target, for selectively moving the target between a first position along a line of sight of the optical viewing device and a second position outside the line of sight.

6. An alignment system as claimed in any preceding claim, further comprising:
a focus control system for the optical viewing device;
a camera for recording images received by the optical viewing device; and
an image processing system for determining the target position of an illuminated target.

7. An alignment system as claimed in claim 6, further comprising a processor for controlling the operation of the optical arrangements.

8. An alignment system as claimed in claim 7, further comprising a transmitter controlled by the processor for transmitting control signals to the optical arrangements, and wherein each optical arrangement is provided with a receiver.

9. An alignment system for determining the alignment of a plurality of components, comprising:
an optical viewing device having a field of view;
a plurality of targets, one target being associated with each component;
a plurality of optical arrangements, one optical arrangement being associated with each target, for providing an image of the associated target within the field of view of the optical viewing device, wherein each optical arrangement provides a different colour image of the associated target; and
an image processor capable of distinguishing between the different colours.

10. An alignment system for determining the alignment of a plurality of components, comprising:
a device for providing a signal along a line of sight; and
a plurality of optical detectors, one optical detector being associated with each component, for determining the location on the detector at which the signal is detected, wherein the signal is selectively routed to each optical detector.

11. An alignment system as claimed in claim 10, wherein each detector comprises a movable mirror and a fixed detector, wherein the mirror is moveable between a first position along the path of the signal for reflecting the signal to the fixed detector and a second position outside the path of the signal.

12. An alignment system as claimed in claim 10, wherein each detector is moveable between a first position along the path of the signal and a second position outside the path of the signal.
